# EUROPEAN PATENT APPLICATION

(11) **EP 2 891 848 A1**
(43) Date of publication of application: **08.07.2015**
(21) Application number: 14198878.2
(22) Date of filing: 18.12.2014
(51) Int. Cl.: F24J 2/46, F24J 2/52

(54) **An assembly as well as a first profile and a second profile suitable for such an assembly**

(30) Priority: 02.01.2014 EP 14150003
(71) Applicant: Comuth, Raoul Henri Hubert Jean, 6229 ZB Maastricht (NL)
(72) Inventor: Comuth, Raoul Henri Hubert Jean, 6229 ZB Maastricht (NL)
(74) Representative: Veldman-Dijkers, Cornelia G. C.

(57) **Abstract**

An assembly (501, 940) comprises a number of first profiles (1, 201, 502, 902) each extending in a first direction, a number of second profiles (300, 522, 918) each extending in a second direction being substantially perpendicular to the first direction, and a number of panels (4, 5, 701) supported by at least two of the first and/or second profiles (1, 502, 902; 300, 522, 918). The first and second profiles (1, 502, 902; 300, 522, 918) are each provided with at least one gutter (512, 530). At a connection between one of said first profiles (1, 201, 502, 902) and one of said second profiles (300, 522, 918) an end of the gutter (512) of the first profile (1, 201, 502, 902) is located at a higher level than the gutter (530) of the second profile (300, 522, 918) to allow in use fluid in the gutter (512) of the first profile (1, 201, 502, 902) to flow into the gutter (530) of the second profile (300, 522, 918). At the connection the second profile (300, 522, 918) intersects the first profile (1, 201, 502, 902), wherein the first profile (1, 201, 502, 902) is provided with at least one recess through which the second profile (300, 522, 918) extends from a first side of the first profile (1, 201, 502, 902) to a second side of the first profile (1, 201, 502, 902).

## Description

### FIELD OF THE INVENTION

The invention relates to an assembly comprising a number of first profiles each extending in a first direction, a number of second profiles each extending in a second direction being substantial perpendicular to the first direction, and a number of panels supported by at least two of the first and/or second profiles, the first and second profiles are each provided with at least one gutter, wherein at a connection between one of said first profiles and one of said second profiles an end of the gutter of the first profile is located at a higher level than the gutter of the second profile to allow in use fluid in the gutter of the first profile to flow into the gutter of the second profile.

The invention also relates to a first profile and a second profile suitable for such an assembly.

Such an assembly can be used to fix rectangular panels, such as photovoltaic (PV) panels, in an adjacent configuration to a wall of a building. The wall typically being a top wall or "roof", but may also be a side wall or "façade".

### BACKGROUND OF THE INVENTION

In such an assembly, known from GB2476256A the second profiles run from the ridge of the roof to the eaves, wherein between two parallel extending second profiles a number of first profiles are located. Each first profile is connected at an end thereof to the second profile. The panels are supported by the profiles wherein two opposite sides of a panel rest on two adjacent first profiles, whilst a two other opposite sides of the panel rest on two adjacent second profiles.

The gutters are located near the sides of the panel so that water seeping through joints between the panels is collected in an upper gutter of the first profile and will drain into the lower gutter of the second profile.

A disadvantage of this known assembly is that the distances between the second profiles need to be measured accurately to be able to mount the relatively short first profiles between two adjacent second profiles. Since there are a large number of first profiles there is a large risk that mistakes are being made. The total height of the known assembly is relatively high, which makes it difficult to integrate the assembly with a known roofing tile construction and the gutter thereof.

The known assembly does not foresee in difficult roof shapes like trapezium-shaped roofs and assembled roofs with roofs extending perpendicular to each other.

The coupling of profiles is relatively difficult.

Another disadvantage of the known assembly is that the main forces on assembly are transferred to the roof construction by the second profiles. Another disadvantage is that for each panel one or two first profiles need to be connected between the second profiles, so that a relatively large number of first profiles are needed.

### SUMMARY OF THE INVENTION

One of the objects of the invention is to provide an assembly whereby the disadvantages of the above mentioned have been overcome and whereby a good drainage of the assembly is maintained.

This object is achieved by the assembly according to the invention in that at the connection the second profile intersects the first profile, wherein the first profile is provided with at least one recess through which the second profile extends from a first side of the first profile to a second side of the first profile.

Since the profiles intersect relatively long first profiles extending in the first direction along a number of panels as well as relatively long profiles extending in the second direction along a number of panels can be used. At each intersection, only one first profile needs to be connected to one second profile. By inserting the second profile into the recess the desired orientation of the second profile with respect to the first profile is automatically obtained. On both sides of the second profile, the gutter of the first profile will be interrupted and each end of the gutter of the first profile near the second profile will drain into the gutter or gutters of the second profile.

Preferably the recesses are provided in the first profiles in advantage in an industrial plant so that at the construction site pre-fabricated first profiles with recess are available. This reduces the risk of failures.

Preferably the first profiles can be mounted by means of distance holders at the required mutual distance.

Since the second profile extends through the first profile, the height of the assembly can be relatively small.

With the assembly according to the invention, also existing roofs can easily be provided with solar panels. The connection to the ridge-tile, the roof gutter and walls can easily be made.

All kind of shapes of roofs can be provided with the assembly according to the invention.

Since the second profiles extends through the first profiles an interconnected assembly is obtained wherein the forces are well divided over the different profiles.

By the assembly the risk that water enters the building below the assembly can be easily prevented, first by a seal between the first profiles and the panels and secondly by the gutter of the second profile.

All kind of panels, like PV-panels, sandwich-panels, panels with or without a frame and with several or different thicknesses can be used.

It can be realised on a roof without the use of commonly known tiles.

An embodiment of the assembly according to the invention is characterized in that the assembly comprises at least three first profiles extending parallel to each other, wherein the second profile extend through aligned recesses of the three first profiles.

In this manner a number of first and second profiles can easily be interconnected and will form a strong support for the panels.

Another embodiment of the assembly according to the invention is characterized in that the first profile is provided with a number of recesses located at predetermined distances of each other, wherein through each recess a second profile extends.

By providing the first profile with a number of recesses, the second profiles can easily be mounted at the desired distance between the second profiles, simply by positioning the second profiles into the recesses.

Another embodiment of the assembly according to the invention is characterized in that the first direction is a horizontal direction, whilst the second direction extends at least partially in vertical direction.

By extending the first profiles in horizontal direction and connecting the first profiles to the roof or a construction on the roof, forces on the assembly will be transmitted at least by the first profiles to the roof. By transmitting the forces via a horizontal extending profile to the roof instead of by a vertical extending or inclined profile to the roof, a better transmission of the forces is being obtained.

On an inclined roof, a panel can simply rest against the first profile extending over a number of panels, whereby the forces are applied directly on the horizontally extending first profile. In such a case no or nearly no forces are applied by the panel on the second profile. No torques are applied on either profile.

Another embodiment of the assembly according to the invention is characterized in that the panels are at least supported at opposite sides by two first profiles.

In this manner both the second profiles as well as the panels are supported by the first profiles. Only the first profiles need to be designed to be able to transmit the forces on the assembly to the roof. The second profiles need only to be designed to drain the water from the gutters in the first profiles.

Another embodiment of the assembly according to the invention is characterized in that the panels are at least supported at opposite sides by two second profiles.

By providing support by the second profiles, a good support of the panels is obtained whilst water on the panel can drain at the opposite sides directly into the at least one gutter of the second profile.

Preferably, each rectangular panel is supported at each side by one of the profiles to prevent bending of the panel and to transmit forces on the panel in a controlled manner via the profiles to the roof or wall.

Another embodiment of the assembly according to the invention is characterized in that the first and/or second profile is provided with at least two gutters being separated by at least one wall, wherein the wall is provided with at least one passage between the two gutters.

In this manner water in one gutter can be drained through the passage to the other gutter.

Another embodiment of the assembly according to the invention is characterized in that the first profile is provided with a support wall, wherein in the recess the second profile is supported by the support wall.

In this manner no additional supports are needed to keep the second profile at a desired level with respect to the first profile. The second profile can easily be inserted into the recess until it rests on the support wall.

Another embodiment of the assembly according to the invention is characterized in that the assembly is provided with at least one constraining element for connecting the panel to the first and/or second profile.

By means of such a constraining element a panel can simply be clamped between the first and/or second profile and the constraining element.

It has to be noted that a method to mount panels to a roof is known from EP2489958A1. With this method any panel, which could for example also be a dummy PV panel, can be fixed to an existing roof (top wall of a building). In the known method the fixing of the panels to the profiles requires sliding the panels into the corresponding U-shaped support elements (see elements 44 in Figure 2 of EP2489958A1) profiles. This sliding step becomes awkward if panels have to be slit over a complete length of the roof. That is why in practice the frame is build up in parts: a first section of the roof is provided with a part of the frame, and after that particular part is filled with panels, a new section of the roof is provided with a part of the frame. An advantage of this method is that dummy panels, which are for example used to fill in the open spaces of the roof where a full-PV panel will not fit, can also be fixed to the roof using the same profiles. For this the dummy panels can be made to fit the open spaces of the roof and slit into the profiles.

In an alternative method, the panels are beforehand provided with a profile along their circumference, for example in the factory where the panels are made, the profiles being constituted such that they can be applied for direct fixing to the roof. Then, the panels are simply fixed to the roof piece-by-piece in an adjacent configuration. Although this is a very simple and time saving method to fix the panels to the roof, it means that it is virtually impossible to completely overlay an existing roof with panels, simply because the chance that the (pre-fabricated) panels exactly fit the roof are virtually nil.

In yet another alternative method the above described method with pre-fabricated panels having a profile along their circumference is used to cover the main part of the roof, and the method using separate profiles is used to cover the open spaces with dummy profiles.

### BRIEF DESCRIPTION OF THE DRAWINGS

The invention will further be explained with reference to the drawings wherein
figure 1 schematically shows a cross section of a first embodiment of a profile according to the invention, to which profile panels are operatively connected,
figure 2 schematically shows a cross section of a second embodiment of a main first profile according to the invention, the first profile being connected to an inclined roof,
figure 3 schematically shows, in a cross section, the relation between the main first profile as shown in figure 2 and a second profile being situated on top of the main first profile,
figure 4 schematically shows, in a top angled view, the relation between the main first profile and a second profile as depicted in figure 3,
figure 5 schematically shows an assembly according to the invention with a framework of main first profiles and second profiles on top of an inclined roof to fix panels of different sizes.
figure 6 schematically shows a cross section of a first profile of a third assembly according to the invention,
figure 7 schematically shows a cross section of a second profile of the third assembly according to the invention,
figure 8 schematically shows a cross section of a constraining element of the third assembly according to the invention,
figures 9 and 10 schematically show cross sections of the third assembly according to the invention, mounted on an inclined roof,
figure 11 shows a cross section of a first profile of a fourth assembly according to the invention,
figure 12 shows a perspective view of a gutter extension for the first profile of figure 11,
figure 13 shows a cross section of the fourth assembly in the middle of the first profile of figure 11 mounted on a roof,
figure 14 shows a cross section of the fourth assembly with the first profile of figure 11 mounted on a roof and the gutter extension as shown in figure 12,
figure 15 schematically shows a cross section of the fourth assembly according to the invention with a cross section of the second profile,
figure 16 shows a cross section of an assembly according to the invention near a side edge of a roof,
figure 17 shows a cross section of an assembly according to the invention near a top of a roof,
figure 18 shows a cross section of an assembly according to the invention near a gutter of a roof.

In the drawings, like reference numerals refer to like elements.

### DESCRIPTION OF THE FIGURES

The following definitions will be used in this patent application:
"Length" and "width" are relative dimensional features that describe a length measure of an object. The length of an object may be the longest dimensions of a particular object or the dimension of that object in a longitudinal direction of a main object to which the particular object is attached.
"Adjacent" means near or close, in particular next to.
"An object extending in a direction perpendicular to", means that the object at least extends in that direction, but it does not exclude that the object also extends over a few degrees in another direction.
"A longitudinal object extending in a direction parallel to another longitudinal object", means that the objects in essence extend in the same direction.
"Proximal" in the sense of the invention means near the upstream end, in particular near a wall top ridge.
"Distal" in the sense of the invention means near the downstream end, in particular near a wall bottom ridge (the gutter).
"Defining an object" means forming at least part of the contours of the object.
"Corresponding to a length measure" means having a length that has a logical relation to the said length measure, for example the same, half or double the length of this length measure.
"In essence" means that it is perceived as such when practically using it for the purpose intended. For example, a tabletop in essence is flat, whereas on a microscopic scale it may be extremely rough.
"An operative connection of two parts" means that the parts are connected to have a working relationship, wherein the parts are not necessarily united to become one.

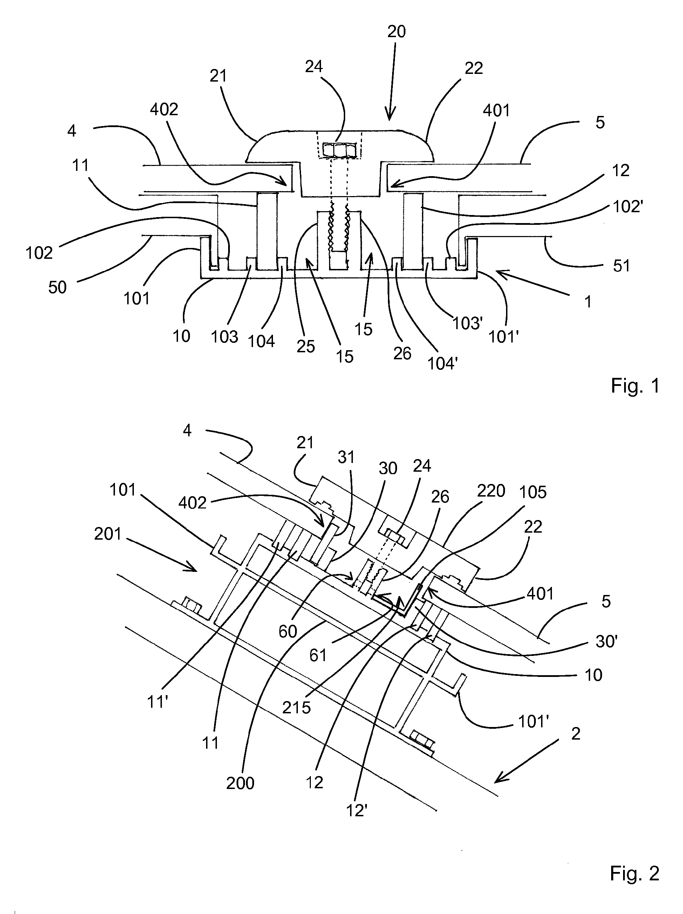

Figure 1 schematically shows a cross section of a first embodiment of a main first or second profile 1 according to the invention, to which profile panels 4 and 5 are operatively connected. In this embodiment the profile 1 comprises a longitudinal flat base element 10 having a length between 2 and 5 meters, preferably 4 -5 meters, and being made of steel to provide sufficient stiffness. It can also be made of other kind of materials like aluminium. Panels 4 and 5 are photovoltaic panels having standard length and width dimensions like for example 1,65 x 1 meter, 2 x 1 meter, 1,2 x 0,8 meter. The base element 10 has several integrally formed projections that extend in the longitudinal direction of the base element 10, and to a small height, extend upwardly, away from the flat base element 10. At the edges, projections 101 (upstream, proximal) and 101' (downstream, distal) are provided. These projections, together with smaller projections 102 and 102' serve to provide an anchor for sub profiles 50 and 51 respectively. These sub profiles 50, 51 are hollow, square profiles to support panels 4, 5 over their length in the proximal to distal direction, to determine the distance between two profiles 1 extending parallel to each other and to function as distance holders when mounting the profiles 1 on a roof or wall. Projections 103,104, 103', 104', serve to enclose and operatively connect supporting elements 11, 12 respectively. These supporting elements 11, 12 are made of a hard rubber compound, and support the panels 4, 5 at their respective lateral edge 401, being the proximal edge of panel 5 and the lateral edge 402, being the distal edge of panel 4.

The support elements 11, 12 are connected to the profile 1 after this has been formed, but still, before the profile 1 leaves the factory. In another embodiment, the supporting elements 11, 12 are made part of the profile 1 only after this profile 1 has been connected to a roof or other wall of a building.

In the middle, the profile 1 has two upwardly projecting elements 25, 26 which are provided with internal screw thread at regular, predetermined positions along the length of the profile 1. The elements 25, 26, together with the corresponding intermediate part of the base element 10 in fact together form a longitudinal U profile over the length of the profile 10. This U profile, in particular the threaded portion, is provided to enable connecting the constraining element 20 to the profile 1 using bolt 24. The constraining element 20 fits in between the space between the distal lateral edge 402 of panel 4 and the proximal lateral edge 401 of panel 5. The constraining element 20 has sections 21 and 22 that run across the edge 402 of panel 4 and lateral edge 401 of panel 5 respectively. This way, by connecting the constraining element 20 to the profile 1, the panels 4, 5 are clamped against the supporting elements 11, 12. Since the constraining element 20 is mechanically connected to the profile 1, the panels 4, 5 are operatively connected to the profile 1 by virtue of this clamping action. The constraining element 20 typically runs along the profile 1 over its full length, optionally consisting of several sub constraining elements (for example two sub elements, each having a length of about 1 meter, which together have in essence the same length as the profile 1.

The proximal support element 11 and the distal support element 12, in conjunction with the base element 10 define a gutter 15 which can be used to drain (rain) water that leaks between the projection 21 and lateral edge 402, or the projection 22 and lateral edge 401. By draining the water over the length of the profile 1, the water can be transported over the roof (not shown).

Figure 2 schematically shows a cross section of a second embodiment of a first profile 201 according to the invention, the profile 201 being connected to an inclined roof 2. In this embodiment the first profile 201 consists of a base element 10 which is in the form of a hollow, in essence rectangular first element on top of which the support elements 11, 12 are positioned. In this embodiment, at each side of the first profile 201, two support elements 11, 11', 12, 12' are connected in a side-by-side relationship. The support elements 11, 11', 12, 12 are slit into grooved profiles of the base element 10 to operatively connect them to the first profile 201. The constraining element 220 has a slightly different form in this embodiment, but the principles of connection to the first profile 201 and the concomitant clamping of the panels 4, 5 are the same as in the embodiment as shown in figure 1. In this embodiment, there are projections 30, 30' provided that serve to laterally support the supporting elements. This is preferred when fixing the panels 4, 5 to an inclined roof. The positioning of the projections 30, 30' is a little asymmetric. This way, a block 31 can be positioned between the lateral edge 402 of the upward panel 4 and the projection 30. By having blocks 31 of variable widths available, a precise positioning on the roof in the direction from a top ridge to a bottom ridge can be provided. The proximal support element 11 and the distal support element 12, in conjunction with the base element 10 define a gutter 215 which can be used to drain (rain) water that leaks between the projection 21 and lateral edge 402. By draining the water over the length of the first profile 201, the water is drained laterally over the roof 2. In order to let the water flow freely to gutter 215, projections 25, 26 are provided with a row of holes 60, 61 along their entire length.

Furthermore an angular profile 105 can be positioned in the lower gutter 215, after mounting the first profiles 10 on the roof and second profiles 1 or 300 in the recesses of the first profiles 10. Preferably the angular profile 105 extends beyond the end of the first profile 10 above the gutter 15 of the second profile 1 or 300 so that water will be prevented to leak into a space between the first profile 10 and the second profile 1 or 300.

The first profile 201 is constituted such that the hollow, in essence rectangular first element 10 has an internal intermediate wall 200 that divides the first element 10 along the length of the first profile 201 in two separate hollow sub elements. The upper element of these two elements is the one provided with the longitudinally extending projections 25, 26, 30 and the grooves for connecting support elements 11, 11', 12, 12'. The base element 10 merely serves to provide the required height to makes sure the panels 4 and 5 are at a predetermined distance from the roof 2. The base element 10 is provided with projections 101, 101' that have the same purpose as the corresponding elements 101, 101' in figure 1.

In an alternative embodiment, instead of an intermediate wall 200, the lower hollow part of the base element 1 is provided with fins that extend from the bottom of the element to the position of the (now virtual) intermediate wall 200. This way, the base element 10 is divided in a lower part with fins, and an upper empty part.

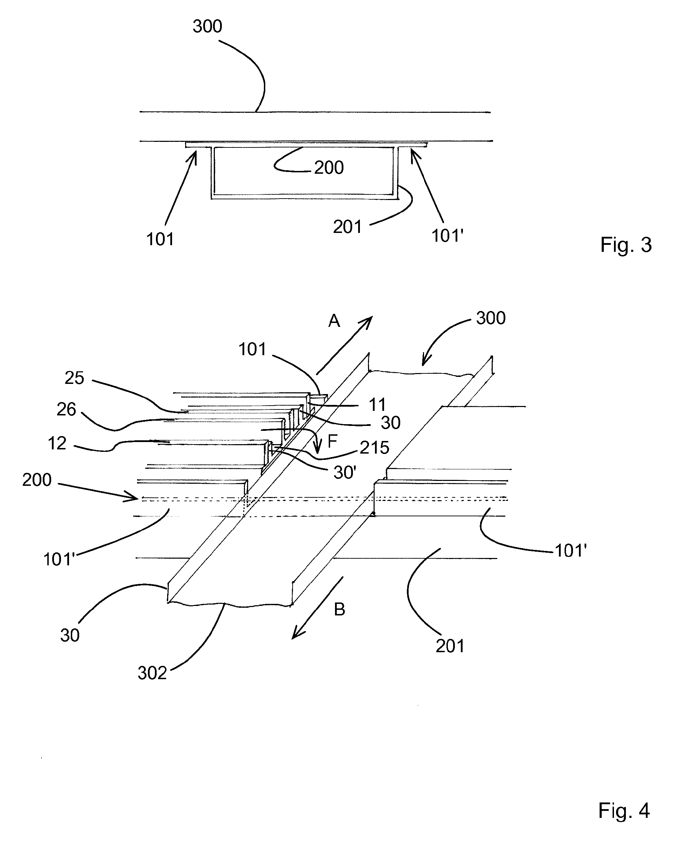

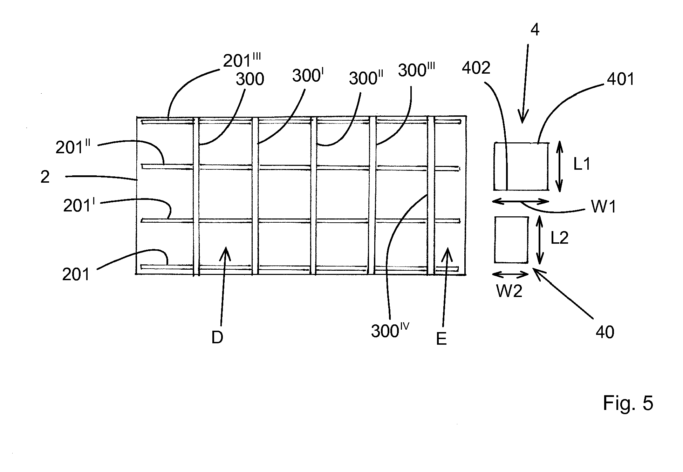

Figure 3 schematically shows, in a cross section, the relation between a first profile 201 and a second sub profile 300 being situated on top of the first profile 1. In this embodiment the first profile 201 according to figure 2 is depicted, however, before the second sub profile 300 is positioned on top of the first profile 201, the supporting elements 11, 11', 12, 12' and other projections that is situated underneath the second sub profile 300 are taken away, for example using a milling machine. In this cross section, that only leaves the lower hollow element of first profile 201, the intermediate wall 200 and part of projections 101,101' are visible.
The second sub profile 300 in this embodiment is constituted as a gutter, having a simple flat bottom 302 and two upstanding walls 301, see figure 4. Typically, such a gutter is placed underneath the length of two adjoining panels 4, 5 to drain any water that leaks between those two panels 4, 5 towards the roof. Also, since the second sub profile 300 has upstanding walls 301 that are lower than the top of base element 10, water running through gutter 15 (see figures 2 and 5) can be emptied into the gutter of the second sub profile 300.

Instead of the second sub profile 300 it is also possible to use profile 1 as second profile.

Figure 4 schematically shows, in a top angled view, the relation between the first profile 201 and the second sub profile 300, having a bottom 302 and sidewalls 301, as depicted in figure 3. For reasons of clarity, the projections extending along the length of the first profile 201, and, to a small distance, perpendicular therewith, have only been drawn for the left hand part of figure 5. For the same reasons, only two, instead of the four supporting elements 11, 12 as depicted in figure 2, are shown. The numbering of the projections corresponds to the numbering as used in figure 2. What can be seen is that gutter 215 empties into the gutter of the second sub profile 300, indicated with curved arrow F. The direction towards the top roof ridge is indicated by arrow A. The direction towards the bottom ridge of the roof is indicated by arrow B.

Figure 5 schematically shows a framework of first profiles 201, 201', 201", 201"' and second sub profiles 300, 300', 300", 300"', 300iv on top of an inclined roof 2 to fix panels 4 and 40 of different sizes. Panel 4 is a regular photovoltaic panel having a width W1 and a length L1. This length L1 extends from a first lateral edge 401 to a second lateral edge 402. Panel 40 is a dummy panel having a width W2 and a length L2. Length L2 is the same as length L1. For this particular roof, three panels 4, 5 of a standard length L1, in an adjacent configuration fit the length of the roof perfectly. However, the width of the roof is such that five standard photovoltaic panels do not completely fill this width, and six of those panels would extend over the roof. That is why a dummy panel 40 has been made. The dummy panel 40 is for example a plastic or a metal panel that resembles panel 4 in appearance to fit the space between 5 panels and the actual roof width.

For this the roof is provided with the first profiles 201 and second sub profiles 300 in a regular mesh structure, width meshes D that correspond to the length L1 and width W1 of the standard photovoltaic panel 4. Here the PV panels are fixed to the roof as shown in figure 2. The positions of second sub profiles 300 correspond to the transition between two adjoining panels. At the right hand side of the roof the meshes E are such that the dummy panels 40 fit. This way, the complete roof can be provided with a homogenous looking panel surface.

In practice sub profiles 50, 51 (see figure 1) are typically used, depending firstly on the length L1 of the panels, to support the panels 4, 5 at intermediate positions along their width W1. The longer the panels 4, 5, the more there is a risk that the panels 4, 5 break when being only supported by the first profiles 1, 201. It is noted that the same solution using dummy panels 40 can be used to work around roof extensions, to deal with roof fittings, irregular shaped roofs, windows in a façade and other reasons why panels 4, 5 having standard dimensions cannot exactly fill an existing wall.

The assembly according to the invention allows a more convenient method of fixing panels to a roof, in particular that allows in a homogenous way to completely fill a roof with pre-fabricated panels of a fixed size, such as PV panels, and dummy panels of variable size.

With such a method to fix at least a first and a second rectangular panel 4, 5 in an adjacent configuration to a wall of a building, the first panel having a first width and a first length, the second panel having a second width and a second length, the length of each panel extending from a first lateral edge to a second lateral edge of said panel, the method comprising the steps of providing a first, second and third main first profile, each having a length covering the first and second widths of the said panels, each of the main first profiles comprising a longitudinal in essence flat base element, and along the length of the base element, the first and third main profile comprising at least one support element that extends in the longitudinal direction of the corresponding base element, the second main profile comprising a proximal support element in parallel with and at a predetermined distance of a distal support element that extends in the longitudinal direction of the base element of the second main profile, the proximal and distal support element in conjunction with this base element defining a first gutter, and all support elements of the said first, second and third main profile extending to a distance from and in a direction perpendicular to, the corresponding base element, durably connecting the first main profile to the wall, durably connecting the second main profile to the wall, parallel to the first main profile and at a distance that corresponds to the length of the first panel, durably connecting the third main profile to the wall, parallel to the second main profile and at a distance that corresponds to the length of the second panel, positioning the first panel with its first lateral edge on the support element of the first main profile, and with its second lateral edge on the proximal support element of the second main profile, positioning the second panel with its first lateral edge on the distal support element of the second main profile, and with its second lateral edge on the support element of the third main profile, leaving a space between the second lateral edge of the first panel and the first lateral edge of the second panel, the space coinciding with the said gutter of the second main profile, positioning a constraining element in between the space between the second lateral edge of the first panel and the first lateral edge of the second panel, which element has sections that run across the second lateral edge of the first panel and the first lateral edge of the second panel to clamp the panels against the supporting elements, and lastly connecting the constraining element to the second main profile to operatively connect the first and second panel to the second main profile.

With this method a frame of main profiles extending along a width (or length) direction of the wall is fixed to the wall, the profiles being arranged at a mutual distance that corresponds to a length of the panels (which are for example pre-fabricated PV panels). Then, the panels (which do not need to be provided with a circumferential profile for fixing) are simply laid down on the supporting elements to an extent that standard sized PV panels can be used to more or less fill the wall. The constraining elements are used to clamp these panels to the supporting elements, and by fixing the constraining elements to the profiles, the panels are in effect fixed to the wall. Then, dummy or other panels are provided that are made to fit the open spaces that could not be filled with the standard (prefab PV) panels, and fixed to the wall using the same profiles and same type of constraining elements. This way, the complete wall can be filled with panels using one type of fixing system, and needing no method wherein the frame is built up in sections on the wall. It is noted that although according to the invention the support elements of the first, second and third main profile extend to a distance from and in a direction perpendicular to the corresponding base element, this distance may be different for each of the support elements. Having a different distance may be advantageous to take into account different thicknesses of different types of panels, and still have the outer surface of the constitutions of panels appearing as one even surface. If all panels that are to be fixed to the wall have the same thickness, all support elements typically extend to the same distance from the base element to obtain a well appearing (even) outer surface. It is also noted that the space between the wall and the panels can be used to contain all kinds of appliances such as ventilators, heat exchangers, micro-invertors etc.

The main first profile comprises a longitudinal in essence flat base element, and along the length of the base element, a proximal support element and a distal support element, the support elements being arranged in parallel and at a predetermined mutual distance, the support elements extending to a distance from and in a direction perpendicular to the base element, wherein the proximal and distal support element in conjunction with this base element define a water tight gutter for transporting water over a length of the profile.

This main first profile is suitable for use in the above described method and at the same time has the advantage that water that leaks through the adjacent panels to the wall will be transported along the length of the main profile, for example to a side of the wall.

In a combination of such a main profile and a constraining element, the constraining element being constituted such that it fits in the open space between the proximal and distal support elements, and which constraining element has sections that extend laterally to project over the supporting elements. This way, when a panel is laid down on a support element with its later edge, it can be clamped to the support element using the constraining element.

In an embodiment of the above described method, in yet another step a first set of sub profiles are connected to the wall, the sub profiles being arranged at a predetermined mutual distance that corresponds to the widths of the panels, which sub profiles extend in parallel to the wall and perpendicular to the main profiles. In this embodiment sub profiles are arranged that may have one or more functions such as for example supporting the panels against bending, or serving as a standard distance at which the main profiles should be arranged.

In a further embodiment wherein the wall is inclined (typically forming a roof) and extends from a top ridge to a bottom ridge, and wherein the main profiles are arranged to extend in horizontal direction, the said sub profiles have the form of a second gutter to guide water towards the bottom ridge of the wall. Most water that falls on the panels will be guided over the panels towards the wall gutter. However, it cannot be excluded that some water will pass in the space between then panels to the wall. In this embodiment the sub profiles are used to guide water that has passed the panels towards the wall gutter. It is even possible to deliberately have openings between the panels to guide the water towards the wall gutter although this is not preferred. Preferably, the sub profiles are arranged underneath the zone where two panels lying next to each other come together, since this is typically the zone where some water may pass the panels to the wall surface.

In yet a further embodiment the first gutter of the second main profile empties into the second gutter of a sub profile. In this embodiment the water that passes the possible openings between two panels at the zone where they are connected to the second main profile, runs into the first gutter, flows across the width of the wall in this gutter, and then is poured into the gutter of the sub profile to be transported to the bottom ridge of the wall. This way, the leakage of any water through the actual wall can be prevented.

In another embodiment the sub profiles are positioned on top of the main profiles. This makes positioning and fixing of the profiles to the wall relatively easy. In a further embodiment, before a sub profile is positioned on top of a main profile, at least part of the supporting element that is situated underneath the sub profile is taken away. This way, the sub profile can be positioned at a depth such that the sub profile does not interfere with the panels. It should be clear that the length of the supporting element that is taken away should at least be the same as the height of the sub profile to prevent this interference.

In yet another embodiment wherein the supporting elements of the second main profile are separate from the base element of this main profile, the supporting elements are operatively connected to the base element in a separate step. This embodiment has the advantage that the supporting elements can easily be made of a material that differs from the material used to constitute the base element. The base element for example typically has to be made of a rather stiff material to provide a dimensionally stable frame, whereas the supporting elements are advantageously made of a somewhat compliant material such as a (hard) rubber to allow some movement of the panels with respect to the frame (for example to meet different expansion coefficients).

In an embodiment of the main first profile according to the invention, the base element is comprised of a hollow, in essence rectangular main element on top of which the support elements are positioned. In this embodiment the base element can be constituted from a relatively light and "compliant" material, and still, due to the hollow rectangular shape, provide the required stiffness. Typical material could for example be aluminium or a resinous material, possible a composite material.

In a further embodiment the hollow, in essence rectangular main element, has an internal intermediate wall that divides the main element along the length of the profile in two separate hollow sub elements. In this embodiment the base element is stiffer. Advantageously, the intermediate wall can be positioned at a depth (taken from the top of the main profile, including the support elements) that matches the height of the sub profile that is to be laid down on the main profile. This way, even when the support elements and optionally part of the base element is "taken away" to be able and position the sub profile on top of the main profile, the main profile is still closed by the intermediate layer to provide the required stiffness and to prevent water from entering the hollow space.

In another embodiment of the main first profile the support elements are separate from the base element and are operatively connected thereto. In an embodiment of the combination the main profile at a site between the support elements is provided with a connection means to durably connect the constraining element to the profile. In a further embodiment the connection means comprises two longitudinally extending upstanding walls defining a U-profile, the U-profile being provided with internal thread for fastening a bolt at predetermined positions along the length of the main profile. This has proven to be a simple but adequate way of offering a means for connecting the constraining element.

In another embodiment the connection means are constituted to let water pass from the proximal support element towards the distal support element. This way, the water that leaks through the spaces of the panels can be gathered in one main gutter of the main profile instead of all obstacles of the main profile defining sub gutters.

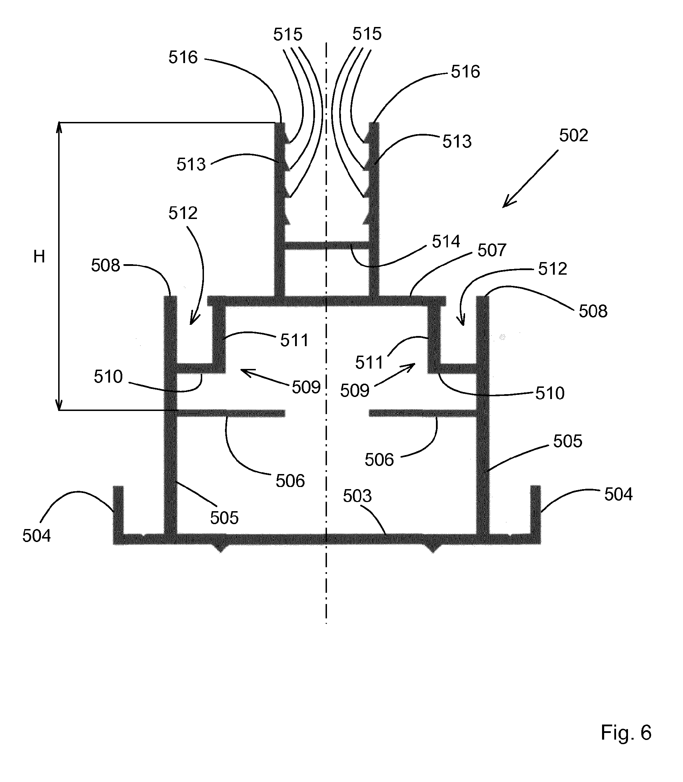

The figures 6-10 show different views of an assembly 501 according to the invention.

Figure 6 shows a cross section of a first profile 502 of the assembly 501. The first profile 502 comprises a base plate 503 provided with two upstanding wall portions 504 near edges of the base plate 503 and two upstanding walls 505 between the wall portions 504. At a distance of the base plate 503, each wall 505 is provided with an intermediate wall 506 extending perpendicular to the wall 505 and parallel to the base plate 503. The first profile 502 is further provided with a contact plate 507 extending parallel to the base plate 503 and located at the same level as ends 508 of the walls 506. The contact plate 507 is connected to the walls 506 by means of angular profiles 509. Each angular profile 509 comprises leg parts 510, 511 extending perpendicular to each other. The wall 505 and the angular profile 509 connected thereto forms a first gutter 512. The contact plate 507 is provided with two upstanding walls 513. The walls 513 are interconnected by means of a wall 514. Each wall 513 each provided on a side directed to the opposite wall 513 with teeth 515. Ends 516 of the walls 513 are located at a distance H of the intermediate walls 506. The distance H is for example 50 - 55 millimetre.

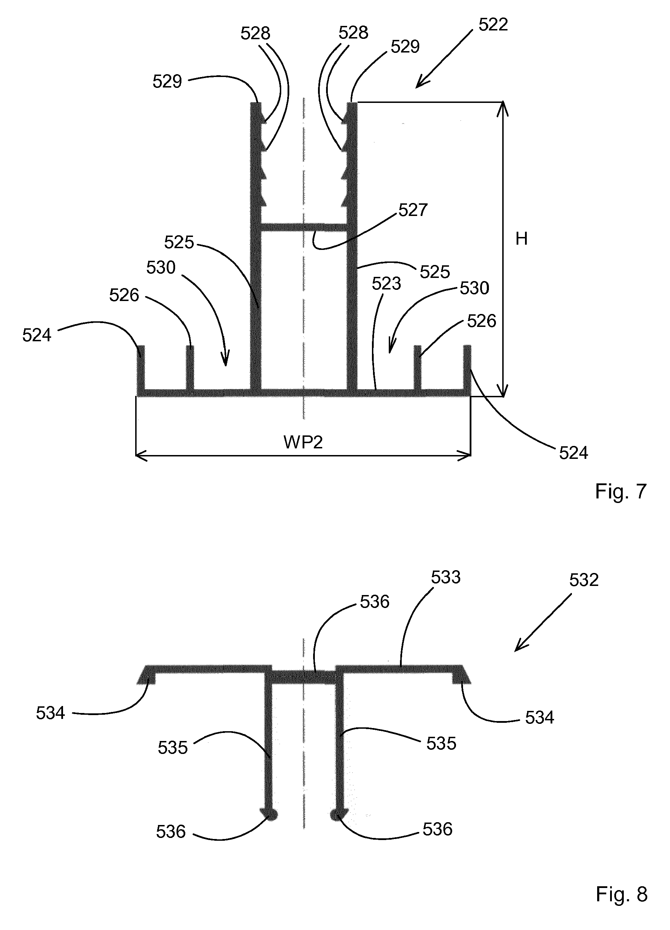

Figure 7 shows a cross section of a second profile 522 of the assembly 501. The second profile 522 comprises a base plate 523 provided with two upstanding wall portions 524 near edges near the base plate 523 and two upstanding walls 525 between the wall portions 524. Between the wall portions 524 and the walls 525 additional wall portions 526 are connected to the base plate 523. The walls 525 are interconnected by means of a wall 527. Each wall 525 is provided on a side directed to the opposite wall 525 with teeth 528. The second profile 522 has a height H between ends 529 of the walls 525 and the base plate 523. The height H of the second profile 522 is identical to the distance H between ends 516 of the walls 513 and the intermediate walls 506 of the first profile 502. The second profile 522 has a width WP2 of for example 60 millimetres.

The base plate 523, the walls 525 and the wall portions 526 form second gutters 530.

Figure 8 shows a cross section of a third profile 532 of the assembly 501. The third profile 532 comprises a base plate 533 provided with two upstanding ridges 534 near edges near the base plate 533 and two upstanding walls 535 between the ridges 524. At the middle the base plate 533 is provided with a recess 536. Each wall 535 is provided at its end avert of the base plate 533 with a tooth 537 for cooperation with the teeth 515, 528 of the first profile 502 and the second profile 522. The third profile 532 forms a constraining element.

The first profile 502, the second profile 522 and the third profile 532 are elongated profiles made for example by means of extrusion of steel, aluminium or plastic.

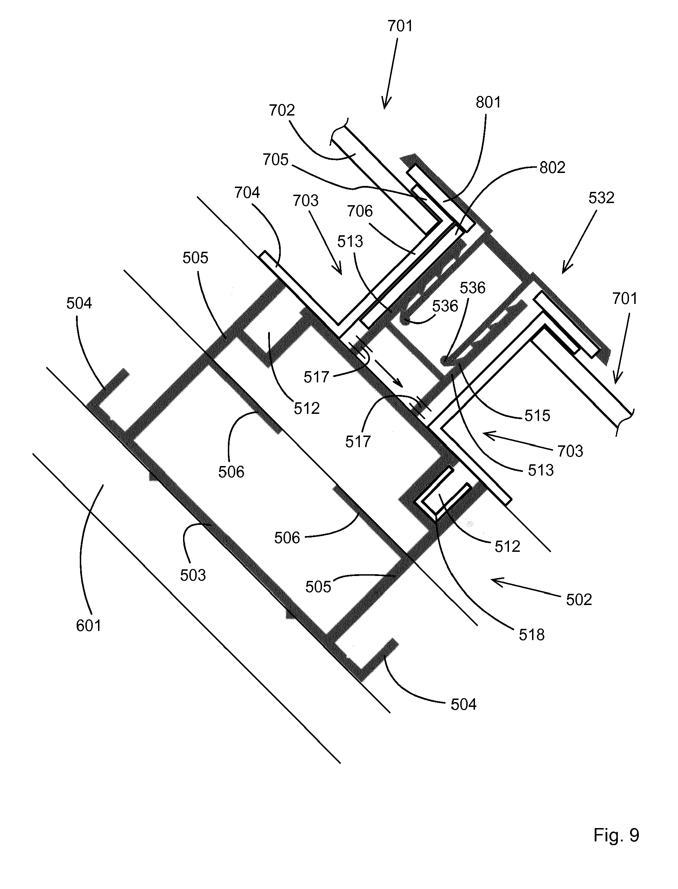

Figure 9 is a cross section of the assembly 501 showing a cross section of the first profile 502 mounted on an inclined roof 601 and a cross section of the third profile 532. The longitudinal direction of the first profile 502 extends horizontal (perpendicular to the drawing). The assembly 501 also comprises panels 701. Each panel 701 comprises a rectangular solar panel 702 and profiles 703 extending along the edges of the solar panel 702. The profiles 703 are U-shaped and provided with two leg portions 704, 705 and a bridge portion 706 extending between the leg portions 704, 705. The leg portion 705 is connected to the solar panel 702. The panel 701 rests with the other leg portion 704 on the contact plate 507 and the ends 508 of the walls 505. The panel 701 is connected to the first profile 502 by means of the third profile 532, whereby the walls 535 of the third profile 532 are inserted in the space between the walls 513 of the first profile 502 until the teeth 528 of the walls 535 are coupled with the teeth of the walls 513 and the panel 701 is clamped between the first and third profile 502, 532. Between the third profile 532 and the panel 701 a seal strip 801 may be provided. A seal strip 802 may also provided between a lower edge of the panel 701 and the wall 513.

As can be seen the walls 513 are provided with passages 517 to drain water from one side of one wall 513 to the other side of the opposite wall 513 and below the panel 701 into the gutter 512.

Furthermore a U-shaped profile 518 can be positioned in the lower gutter 512, after mounting the first profiles 502 on the roof and second profiles 522 in the recesses of the first profiles 502. Preferably the U-shaped profile 518 extends beyond the end of the first profile 502 above the gutter 530 of the second profile 522 so that water will be prevented to leak into a space between the first profile 502 and the second profile 522.

Along its length the first profile 502 is provided with a number of recesses extending perpendicular to the longitudinal direction of the first profile 502, like by the embodiment of the assembly as shown in figure 4. The width of each recess in the longitudinal direction of the first profile 502 is slightly larger than the width WP2 of the second profile 522. The pitch distance between the recesses corresponds to the sum of the width W1, W2 of the panel 701 and the distance between adjacent panels 701.

By forming the recess in the first profile 502 a part of the first profile 502 above the intermediate walls 506 is being removed. When inserting the second profile 522 into the recess, the base plate 523 of the second profile 522 will rest on the intermediate walls 506. The intermediate walls 506 will form a support wall for the second profile 522. Due to the height H the ends 516 of the first profile 502 and the ends 529 of the second profile 522 will be located at the same level so that also the third profiles 532 connected to the first and second profiles 502, 522 will be in a same plane.

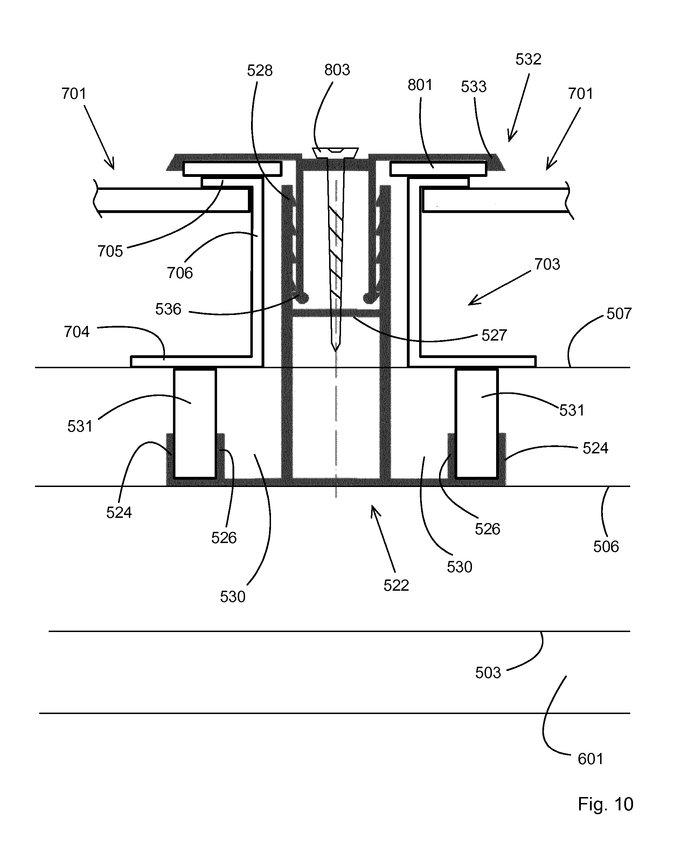

Figure 10 is a cross section of the assembly 501 showing a cross section of the second profile 522 mounted on an inclined roof 601 and a cross section of the third profile 532. The second profile 522 extends from the top of the roof 601 downwardly in a partially vertical direction.

The panel 701 is connected to the second profile 522 by means of the third profile 532, whereby the walls 535 of the third profile 532 are inserted in the space between the walls 525 of the second profile 522 until the teeth 537 of the walls 535 are coupled with the teeth 528 of the walls 525 and the panel 701 is clamped between the second and third profile 522, 532. Additionally the third profile 532 may be connected to the second profile 522 by means of screws 803 extending through the wall 527.

To support the panels 701 supporting elements 531 may be inserted and clamped in the openings between the base plate 523 and the wall portions 524 and 526.

As can be seen in the figures 9, 10 the first gutters 504 of the first profile 502 are located at a lower level and closer to the roof 601 than the second gutters 530 of the second profile 522 to allow in use at the connection between the first and second profile 502, 522 fluid in the gutter 504 of the first profile to flow into the gutter 530 of the second profile 522. At the connection the second profile 522 intersects the first profile 502, wherein the second profile 522 extends through the recess from a first side of the first profile 502 to a second side of the first profile 502. In this manner both the first and the second profiles 502, 522 can extend along a large number of panels 701, wherein each panel 701 is supported along two of its four edges by first profiles 502 and along the other two of its four edges by second profiles 522.

In such a case at least three first profiles 502 extend parallel to each other, wherein the second profile 522 extend through aligned recesses of the three first profiles 502.

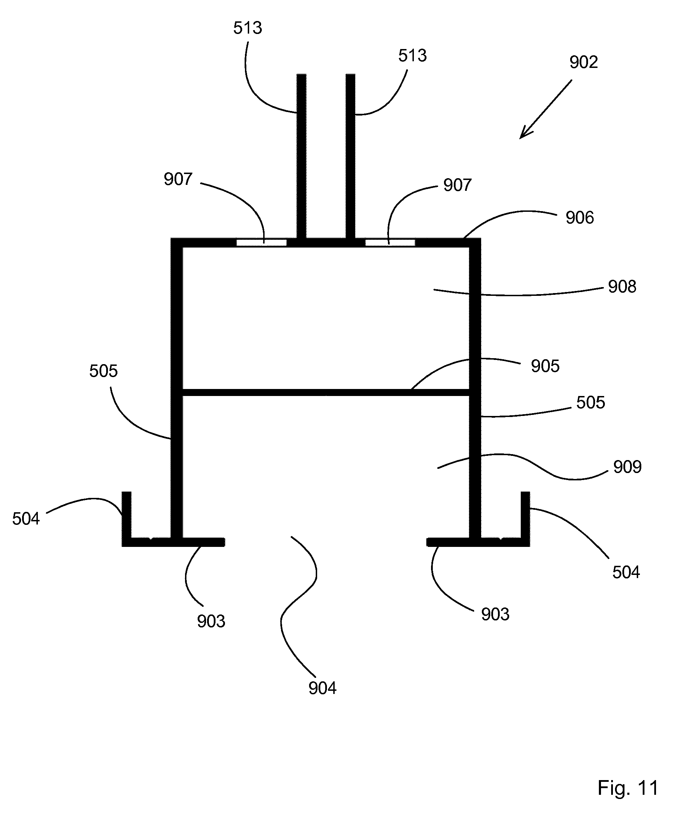

The figures 11-15 show different views of a fourth embodiment of an assembly 901 according to the invention.

Figure 11 shows a cross section of a first profile 902 of the assembly 501. The first profile 902 comprises a base plate 903 provided with two upstanding wall portions 504 near edges of the base plate 903 and two upstanding walls 505 between the wall portions 504. In the middle the base plate 903 is provided with an elongated slot 904. At a distance of the base plate 903, an intermediate wall 905 extends perpendicular between the walls 505 and parallel to the base plate 903. Between ends of the walls 505 a contact plate 906 extends parallel to the base plate 903. The contact plate 906 is provided with a number of holes 907 to guide water into a space 908 bounded by the contact plate 906, the intermediate wall 905 and the walls 505. Below the space 908, the intermediate wall 905, the base plate 903 and the walls 505 bound a space 909.

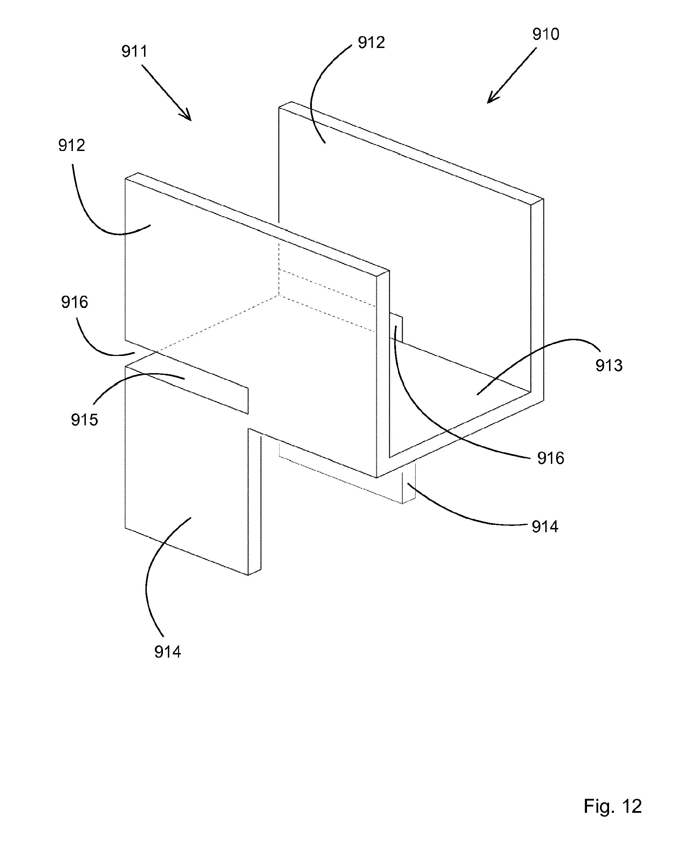

Figure 12 shows a gutter extension 910 provided with a first and a second U shaped part 910, 911. The first U-shaped part 910 comprises two parallel leg parts 912 connected to each other over half of their length by a bridge part 913.

The second U-shaped part 911 comprises two parallel leg parts 914 connected to each other by a portion 915 of the bridge part 913. The leg parts 912 of the first U-shaped part 910 extend in an opposite direction from the bridge part 913 as the leg parts 914 of the second U-shaped part 911. Between the leg parts 912 of the first U-shaped part 910 and the portion 915 of the bridge part 913 slits 916 are provided. The slits 916 have a height slightly larger than the thickness of the intermediate wall 905.

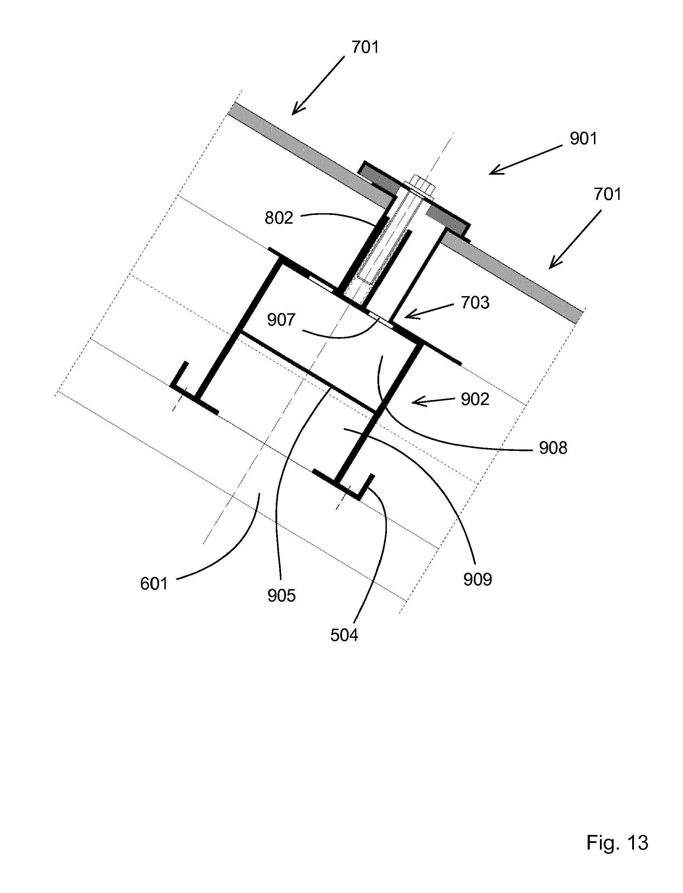

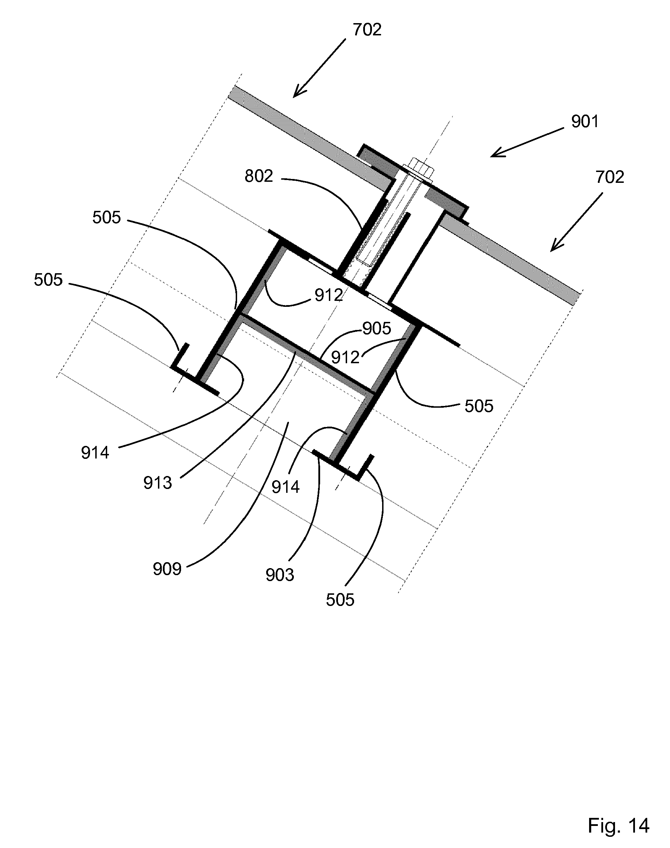

Figures 13 and 14 show cross sections of the assembly 901 mounted on a roof. Preferably, the mounting process starts with mounting a first profile 902 near the top of the roof. Then distance holders are connected to the walls 504, after which a next first profile 902 is connected to the distance holders. After said first profile 902 is connected to the roof, the distance holders can be used to position a next first profile 902 to the roof. In this manner, after correctly positioning the first first profile 902, the following first profiles 902 can be positioned by means of the distance holders. When mounting the first profiles 902, the recesses of the first profiles 902 should be aligned so that the second profiles can easily be located in the aligned recesses.

Figure 13 shows a cross section in the middle of the first profile 902 with the panels 702 connected thereto.

After mounting the first profiles 902, each first profile 902 is provided near at least one end with a gutter extension 910 by sliding the bridge part 913 and the leg parts 914 into the lower space 909 and the leg parts 912 in the upper space 908. The intermediate wall 905 is positioned in the slits 916 until it abuts against the leg parts 912.

Figure 14 shows a cross section of the first profile 902 and the gutter extension 910 as well as with the panels 702 connected to the first profile 902.

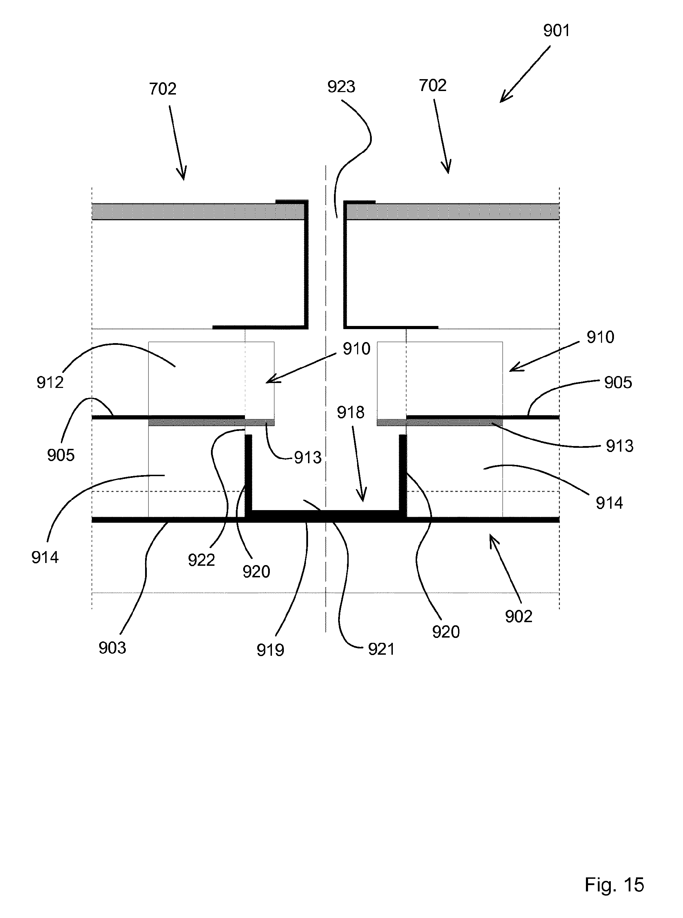

Figure 15 shows a cross section of the fourth assembly 901 across a second profile 918. The second profile 918 is U-shaped and comprises a bridge portion 919 positioned on the base plate 903 and two leg portions 920 extending perpendicular to the bridge portion 919. The leg portions 920 are located adjacent to the leg parts 914 of the gutter extension 910 and below the bridge part 913 of the gutter extension 910. The bridge part 913 and the leg parts 912 extend beyond the intermediate wall 905 of the first profile 902 and beyond the leg portions 920 of the second profile 918 so that water will flow from the space 908 above the intermediate wall 905 of the first profile 902 over the bridge part 913 of the gutter extension 910 into a gutter 921 formed by the U-shaped second profile 918 and will not flow in a gap 922 between the intermediate wall 905 and the leg portion 920.

Above the second profile 918 a gap 923 is present between adjacent panels 702 through which water may leak into the gutter 921 of the second profile 918.

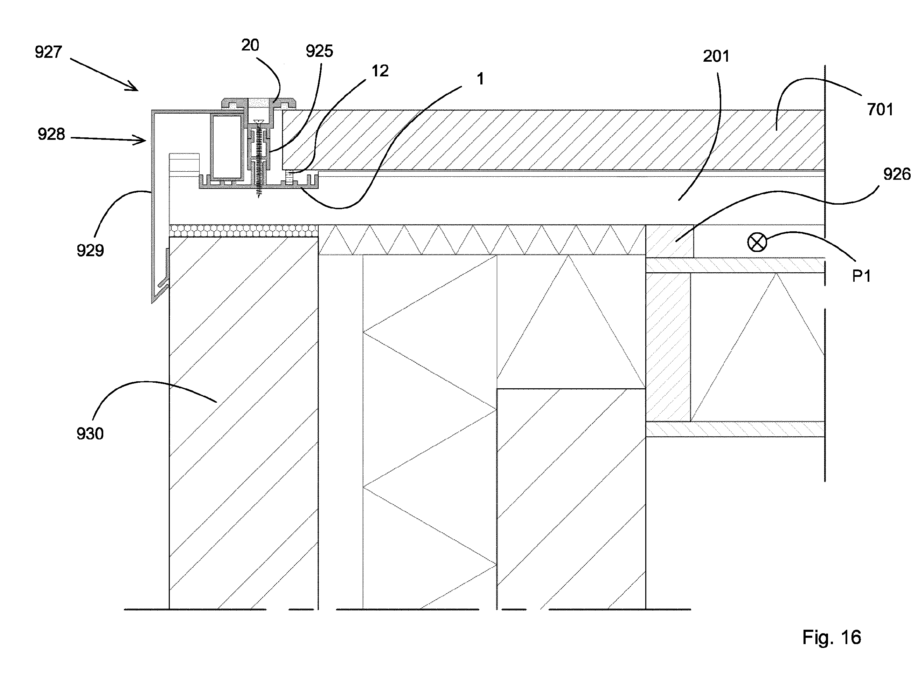

Figure 16 shows a cross section of an assembly according to the invention near a side edge of a roof, which assembly comprises the first profiles 201 and the second profiles 1. The panels 701 are clamped between the constraining element 20 and the second profile 1. Between the constraining element 20 and the second profile 1 a profile 925 is located to be enlarge the distance between the constraining element 20 and the second profile 1 according to the thickness of the panel 701. The first profile 201 is connected to lath 926.

At a side of the profile 925 avert of the panel 701, a profile 927 is clamped between the constraining element 20 and the second profile 1. The profile 927 comprises an L-shaped part 928, wherein leg 929 of the L-shaped part 928 extends along an edge 930 of the roof.

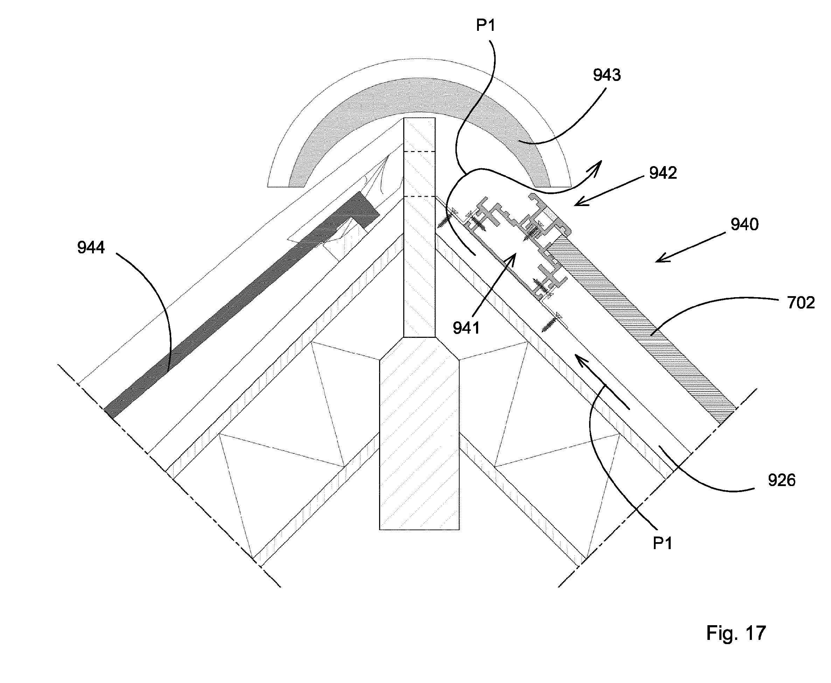

Figure 17 shows a cross section of an assembly 940 according to the invention near a top of a roof. The assembly comprises a first profile 941 similar to profile 10 and a constraining element 942 similar to constraining element 220.

The roof is provided with a ridge-tile 943. On a side of the ridge-tile 943 avert of the assembly 940, the roof is provided with tiles 944.

With a panel 702 having a thickness of 20 millimetres and a height of the first profile 941 between the lath 926 and the panel 702 of 37 millimetres, the total height of the assembly 940 is about the same as the height on the side of the tiles 944. In this manner the assembly 940 is suitable to be used as a replacement of tiles.

Below the solar panels 702 ventilation of air is possible between the laths 923 in the direction as indicated by arrow P1. Due to this ventilation the solar panels have a higher output.

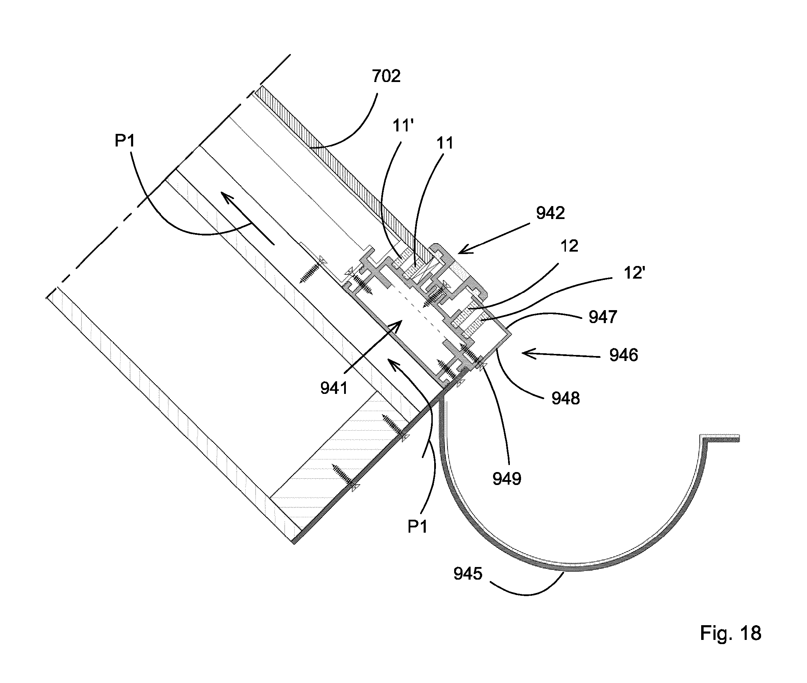

Figure 18 shows a cross section of an assembly according to the invention near a gutter 945 of a roof. An L-shaped profile 946 is clamped with a first leg 947 between the first profile 941 and the constraining element 942. A second leg 948 of the L-shaped profile 946 is connected by means of screws 948 tot the first profile 941. Below the solar panels 702 ventilation of air is possible between the laths 923 from the gutter 945 of the roof to ridge-tile 943 in the direction as indicated by arrow P1. Due to this ventilation the solar panels have a higher output.

The person skilled in the art will realize that the present invention is by no means limited to the preferred embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

Any reference signs in the scope should not be construed as limiting the scope of the claims.

### LIST OF REFERENCE SIGNS

- 1: profile
- 1': profile
- 1'': profile
- 1''': profile
- 2: roof
- 4: panel
- 5: panel
- 10: base element
- 11: element
- 11': element
- 12: element
- 12': element
- 15: gutter
- 20: element
- 21: section
- 22: section
- 24: bolt
- 25: projecting element
- 26: projecting element
- 30': projection
- 31: block
- 40: panel
- 50: sub profile
- 51: sub profile
- 60: hole
- 101: projection
- 101': projection
- 101: element
- 101': element
- 103: projection
- 103': projection
- 104: projection
- 104': projection
- 105: angular profile
- 200: wall
- 201: main first profile
- 215: gutter
- 220: constraining element
- 300: sub profile
- 300': sub profile
- 300'': sub profile
- 300''': sub profile
- 300^{iv}: sub profile
- 301: wall
- 302: bottom
- 401: lateral edge
- 402: lateral edge
- 501: assembly
- 502: first profile
- 503: base plate
- 504: wall portion
- 505: wall
- 506: wall
- 507: contact plate
- 508: end
- 509: angular profile
- 510: leg part
- 511: leg part
- 512: first gutter
- 513: wall
- 514: wall
- 515: tooth
- 516: end
- 517: passage
- 518: profile
- 522: second profile
- 523: base plate
- 524: wall portions
- 525: wall
- 526: wall portion
- 527: wall
- 528: tooth
- 529: end
- 530: second gutter
- 531: supporting element
- 532: third profile
- 533: base plate
- 534: ridge
- 535: wall
- 536: recess
- 537: tooth
- 601: roof
- 701: panel
- 702: solar panel
- 703: profile
- 704: leg portion
- 705: leg portion
- 706: bridge portion
- 801: seal strip
- 802: seal strip
- 803: screws
- 901: assembly
- 901: first profile
- 903: base plate
- 904: slot
- 905: wall
- 906: contact plate
- 907: hole
- 908: space
- 909: space
- 910: first U-shaped part
- 911: second U-shaped part
- 912: leg part
- 913: bridge part
- 914: leg part
- 915: portion
- 916: slit
- 918: second profile
- 919: bridge portion
- 920: leg portion
- 921: gutter
- 922: gap
- 923: gap
- 925: profile
- 926: lath
- 927: profile
- 928: L-shaped part
- 929: leg
- 930: edge
- 940: assembly
- 941: first profile
- 942: constraining element
- 943: ridge-tile
- 944: tile
- 945: gutter
- 946: L-shaped profile
- 947: first leg
- 948: second leg
- A: arrow
- B: arrow
- D: mesh
- E: mesh
- F: arrow
- H: height
- H: distance
- L1: length
- L2: length
- P1: arrow
- W1: width
- W2: width
- W2: width
- WP2: width

## Claims

1. An assembly (501, 940) comprising a number of first profiles (1, 201, 502, 902) each extending in a first direction, a number of second profiles (300, 522, 918) each extending in a second direction being substantial perpendicular to the first direction, and a number of panels (4, 5, 701) supported by at least two of the first and/or second profiles (1, 201, 502, 902; 300, 522, 918), the first and second profiles (1, 502, 902; 300, 522, 918) are each provided with at least one gutter (512, 530), wherein at a connection between one of said first profiles (1, 201, 502, 902) and one of said second profiles (300, 522, 918) an end of the gutter (512) of the first profile (1, 201, 502, 902) is located at a higher level than the gutter (530) of the second profile (300, 522, 918) to allow in use fluid in the gutter (512) of the first profile (1, 201, 502, 902) to flow into the gutter (530) of the second profile (300, 522, 918), **characterized in that** at the connection the second profile (300, 522, 918) intersects the first profile (1, 201, 502, 902), wherein the first profile (1, 201, 502, 902) is provided with at least one recess through which the second profile (300, 522, 918) extends from a first side of the first profile (1, 201, 502, 902) to a second side of the first profile (1, 502, 902).

2. An assembly (501, 940) according to claim 1, **characterized in that** the assembly (501, 940) comprises at least three first profiles (1, 502, 902) extending parallel to each other, wherein the second profile (300, 522, 918) extend through aligned recesses of the three first profiles (1, 502, 902).

3. An assembly (501, 940) according to claim 1 or 2, **characterized in that** the first profile (1, 201, 502, 902) is provided with a number of recess located at predetermined distances of each other, wherein through each recess a second profile (300, 522, 918) extends.

4. An assembly (501, 940) according to one of the preceding claims, **characterized in that** the first direction is a horizontal direction, whilst the second direction extends at least partially in vertical direction.

5. An assembly (501, 940) according to one of the preceding claims, **characterized in that** the panels (4, 5, 701) are at least supported at opposite sides by two first profiles (1, 201, 502, 902).

6. An assembly (501, 940) according to one of the preceding claims, **characterized in that** the panels (4, 5, 701) are at least supported at opposite sides by two second profiles (300, 522, 918).

7. An assembly (501, 940) according to one of the preceding claims, **characterized in that** the first and/or second profile (1, 201, 502; 300, 522, 918) is provided with at least two gutters (512, 530) being separated by at least one wall, wherein the wall is provided with at least one passage (60, 61) between the two gutters (512, 530).

8. An assembly (501, 940) according to one of the preceding claims, **characterized in that** the first profile (1, 201, 502, 902) is provided with a support wall (200, 506), wherein in the recess the second profile (300, 522, 918) is supported by the support wall (200, 506).

9. An assembly (501, 940) according to one of the preceding claims, **characterized in that** the assembly (501, 940) is provided with at least one constraining element (20, 503) for connecting the panel (4, 5, 701) to the first and/or second profile (1, 201, 502, 902; 300, 522, 918).

10. A first profile (1, 201, 502, 902) suitable for an assembly (501, 940) according to one of the preceding claims.

11. A second profile (300, 522, 918) suitable for an assembly (501, 940) according to one of the preceding claims 1-9.
